(19) Europäisches Patentamt

European Patent Office

Office européen des brevets

(11) **EP 1 456 553 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(21) Anmeldenummer: **02793041.1**

(22) Anmeldetag: **17.12.2002**

(51) Int Cl.:
**F16D 48/06** (2006.01)

(86) Internationale Anmeldenummer:
**PCT/EP2002/014377**

(87) Internationale Veröffentlichungsnummer:
**WO 2003/054410 (03.07.2003 Gazette 2003/27)**

(54) **VERFAHREN ZUR ERMITTLUNG DES KUPPLUNGSANLEGEPUNKTES**

METHOD FOR DETERMINING THE CLUTCH APPLICATION POINT

PROCEDE DE DETERMINATION DU POINT D'APPLICATION D'UN EMBRAYAGE

(84) Benannte Vertragsstaaten:
**DE SE**

(30) Priorität: **21.12.2001 DE 10163438**

(43) Veröffentlichungstag der Anmeldung:
**15.09.2004 Patentblatt 2004/38**

(73) Patentinhaber: **ZF FRIEDRICHSHAFEN AG**
**88038 Friedrichshafen (DE)**

(72) Erfinder:
• **SCHWENGER, Andreas**
 **38446 Wolfsburg/Reislingen (DE)**
• **EBNER, Otto**
 **88048 Friedrichshafen (DE)**
• **SCHWEIGER, Klaus**
 **88046 Friedrichshafen (DE)**
• **WINKEL, Matthias**
 **88250 Weingarten (DE)**
• **RÜCHARDT, Christoph**
 **88131 Bodolz (DE)**
• **GANSOHR, Marcus**
 **88682 Neufrach (DE)**
• **KNOBLAUCH, Thomas**
 **66123 Saarbrücken (DE)**

(56) Entgegenhaltungen:
**EP-A- 0 939 239        WO-A-01/63136**

**Beschreibung**

Die vorliegende Erfindung betrifft ein Verfahren zur Ermittlung eines Kupplungsanlegepunktes bei einem Getriebe eines Fahrzeuges mit einem federbetätigten Kupplungssystem.

Es ist ein Verfahren zur Ermittlung bzw. Bestimmung des Kupplungsanlegepunktes bekannt, bei dem ein getriebeseitig angebrachter Drehzahlsensor ausgewertet wird. Das Getriebe wird in Neutral geschaltet und die Kupplung langsam vom offenen Zustand in den geschlossen Zustand überführt. Mit Hilfe des Drehzahlsensors kann dabei eine Änderung der Getriebeeingangsdrehzahl festgestellt werden. Wenn sich die Kupplung hinter dem Anlegepunkt befindet, wird ein Moment mit der Kupplung übertragen. Diesen Punkt, an dem die Kupplung ein unstetiges Verhalten aufweist, wird als Anlegepunkt bezeichnet. In nachteiliger Weise kann dieses Verfahren nur bei laufendem Motor durchgeführt werden. Des weiteren ist ein zusätzlich eingebauter Getriebeeingangsdrehzahlsensor erforderlich, wodurch insbesondere die Herstellungskosten erhöht werden.

Aus der EP 0 550 222 A2 ist ebenfalls ein Verfahren zum Bestimmen eines Kupplungsanlegepunktes bekannt, welches nur bei laufendem Motor durchgeführt werden kann.

Des weiteren ist ein Verfahren zur Ermittlung bzw. Bestimmung des Kupplungsanlegepunktes bekannt, bei dem die Einspritzmenge des Motors bei eingelegtem Gang im Leerlauf ausgewertet wird. Die Kupplung wird dabei aus dem geöffneten Zustand in den geschlossenen Zustand überführt. Der Leerlaufregler des Motors versucht die Drehzahl des Motors konstant einzuregeln. Wenn eine Erhöhung der motorabtriebsseitigen Last im Leerlauf erfolgt, reagiert der Motorregler mit einer Erhöhung der Einspritzmenge. Diese Erhöhung wird zur Detektion des Anlegepunktes verwendet. Bei diesem Verfahren werden in nachteiliger Weise umfangreiche Informationen des Motors benötigt. Darüber hinaus kann auch dieses bekannte Verfahren nur bei laufendem Motor eingesetzt werden. Bei einem möglichen Ausfall der Kommunikation zwischen dem Motor und dem Getriebe ist diese Art der Erkennung nicht möglich.

Ein Verfahren mit den Merkmalen des Oberbegriffs der Ansprüche 1 und 2 ist bekannt aus EP-A-939 239.

Der vorliegenden Erfindung liegt die Aufgabe zugrunde, ein Verfahren zur Ermittlung eines Kupplungsanlegepunktes bereitzustellen, bei dem insbesondere kostengünstig eine möglichst hohe Verfügbarkeit sichergestellt wird.

Diese Aufgabe wird durch die Merkmale der Patentansprüche 1 und 2 gelöst. Weitere Ausgestaltungen und Varianten gehen aus den Unteransprüchen hervor.

Demnach wird ein erfindungsgemäßes Verfahren vorgeschlagen, bei dem der Kupplungsanlegepunkt in Abhängigkeit von einer geeigneten Stellgröße adaptiert wird. Es ist besonders vorteilhaft bei diesem Verfahren, dass es auch bei ausgeschaltetem Motor durchführbar ist. Des weiteren ist keine zusätzliche Sensorik zum Erfassen von Drehzahlsignalen und/oder Einspritzmengensignalen erforderlich. Insgesamt kann mit dem Verfahren eine höhere Verfügbarkeit und darüber hinaus eine Kostenersparnis realisiert werden.

Die Erfindung sieht vor, dass als Stellgröße die zum Betätigen des Kupplungssystems vorgesehene Ausrückkraft verwendet wird. Die Ausrückkraft wirkt entgegen einer Anpresskraft, welche bei geschlossener Kupplung durch die Vorspannung z. B. einer Tellerfeder vorgegeben ist. Durch die Ausrückkraft werden z. B. Membranfederzungen am Ausrücksystem betätigt. Sobald die Anpresskraft durch die Ausrückkraft egalisiert ist, wird mit dem Öffnen des Kupplungssystems begonnen, sodass der Kupplungsanlegepunkt erreicht wird.

Bei dem erfindungsgemäßen Verfahren nach Anspruch 1 kann der Kupplungsanlegepunkt durch einen gemeinsamen Schnittpunkt des Verlaufes der Ausrückkraft und des Verlaufes der Federkraft über den Ausrückweg ermittelt werden.

Gemäß einer weiteren Ausgestaltung der Erfindung ist der Kupplungsanlegepunkt durch eine Unstetigkeit im Gradientenverlauf gekennzeichnet. Deshalb kann bei dem erfindungsgemäßen Verfahren nach Anspruch 2 der Gradientenverlauf der Ausrückkraft ermittelt und die Unstetigkeit bestimmt werden, sodass der gewünschte Kupplungsanlegepunkt erhalten wird.

Es ist möglich, dass zum Ermitteln des Gradientenverlaufs der Ausrückkraft durch Messungen geeigneter Stellgrö-ßen auf die Ausrückkraft zurückgeschlossen werden kann, sodass z. B. abschnittsweise ein vor und ein nach der Unstetigkeit vorgesehener Gradient ermittelt wird. Beispielsweise können mit den ermittelten Gradienten Steigungen und somit entsprechende. Geraden bestimmt werden, deren gemeinsamer Schnittpunkt dann den Unstetigkeitspunkt und damit auch den Kupplungsanlegepunkt angibt.

Eine Weiterbildung der vorliegenden Erfindung kann vorsehen, dass bei einem mechanisch betätigten Ausrücksystem bei geschlossener Kupplung die Anpresskraft durch die Vorspannung der Tellerfeder vorgegeben ist. Wenn jetzt die Membranfederzungen am Ausrücksystem betätigt werden, kann die Anpresskraft, um die Kraft am Ausrücker multipliziert mit dem Hebel, reduziert werden. Dies wird durch folgende Gleichung dargestellt:

$$F_{Anp}(S) = F_{AnpAP} - i_{Hebel} F_{Ausrueck}(S)$$

mit

$F_{Anp}(S)$         = Anpresskraft

$F_{AnpAP}$         = Anpresskraft am Arbeitspunkt

$i_{Hebel}$         = Kraftverstärkungsfaktor

$F_{Ausrueck}(S)$         = Ausrückkraft

Die Abhängigkeit der Ausrückkraft vom Ausrückweg ist bei dieser Ausgestaltung nahezu linear. Es gilt somit:

$$F_{Ausrueck}(S) = c_{Membranfeder} * S_{Ausrueck}$$

mit

$F_{Ausrueck}(S)$         = Ausrückkraft

$c_{Membranfeder}$         = Federkonstante

$S_{Ausrueck}$         = Ausrückweg

Wenn die Anpresskraft durch Betätigen der Membranfederzungen den Wert Null annimmt, ist der Kupplungsanlegepunkt erreicht. Es gilt in diesem Punkt:

$$F_{Anp}(S_{Anlege}) = 0.0$$

Genau am Kupplungsanlegepunkt tritt eine systembedingte Unstetigkeit auf. Bei weiterem Öffnen der Kupplung ändert sich die Ausrückkraft nur mit der Kennlinie der verwendeten Feder, wie z. B. einer Membranfeder. Die Ausrückkraft am Ausrücksystem ergibt sich dann durch:

$$F_{Ausrueck}(S) = F_{Tellerfeder}(S_{Teller})/i_{Hebel}$$

Der Gradientenverlauf der Ausrückkraft vor der Unstetigkeit ergibt sich aus:

$$\frac{d}{ds}F_{Ausrueck}(S) = c_{Membranfeder} \quad für \ S < S_{Anlegepunkt}$$

und der Gradientenverlauf nach der Unstetigkeit ergibt sich aus:

$$\frac{d}{ds}F_{Ausrueck}(S) = \frac{d}{ds}F_{Tellerfeder}(S_{Teller})/i_{Hebel} \quad für \ s > s_{Anlegepunkt}$$

Wenn keine Belagfederung verwendet wird, weist die Ableitung bzw. der Gradientenverlauf der Ausrückkraft am Ausrücksystem eine Unstetigkeit auf. Bei der Verwendung einer Belagfederung kann der Übergang stetig sein. Jedoch ist der Übergangsbereich auch hier ermittelbar.
Eine weitere Ausgestaltung kann vorsehen, dass das Kupplungssystem aus dem geschlossenen Zustand durch eine geeignete Aktuatorik in den geöffneten Zustand überführt wird. Es ist auch möglich, dass eine Ausrückkraft-Gradientenänderung über die Auswertung der Stellgröße und dem resultierenden Weg am Ausrücksystem ermittelt wird. Die Ermittlung kann selbstverständlich auch vom Übergang vom geöffneten zum geschlossenen Zustand der Kupplung durchgeführt werden. Dies ist sowohl bei hydraulischer, pneumatischer als auch bei elektrischer Ansteuerung des Küpplungsaktuators möglich.

Für eine hydraulische Kupplungsbetätigungseinrichtung mit Taktventilen kann beispielsweise zur Ermittlung des Anlegepunktes vorgesehen sein, dass aus dem geschlossenen Zustand der Kupplung mit konstanter bzw. definierter Pulsweite das Kupplungsöffnungstaktventil angesteuert wird. Ebenso kann bei einem geöffneten Zustand der Kupplung mit konstanter bzw. definierter Pulsweite das Kupplungsschließventil angesteuert werden. Je größer der Druck im Kupplungsnehmerzylinder ist, desto kleiner werden die erzielten Schrittweiten. Der Durchfluss am Ventil ist von der Druckdifferenz abhängig. Durch die Auswertung der erfassten Kupplungswege kann dann der Kupplungsanlegepunkt bestimmt werden.

Das erfindungsgemäße Verfahren kann auch bei pneumatischer Ansteuerung des Kupplungsaktuators vorgesehen werden. Wenn ein elektro-pneumatisches System zur Ansteuerung des Kupplungsaktuators vorgesehen wird, kann vorzugsweise aus den Messungen von Weg und Druck auf den Anlegepunkt geschlossen werden. Wenn ein elektrisches System zur Ansteuerung des Kupplungsaktuators vorgesehen wird, kann vorzugsweise aus den Messungen von Weg, Spannung und/oder Strom auf den Anlegepunkt geschlossen werden.

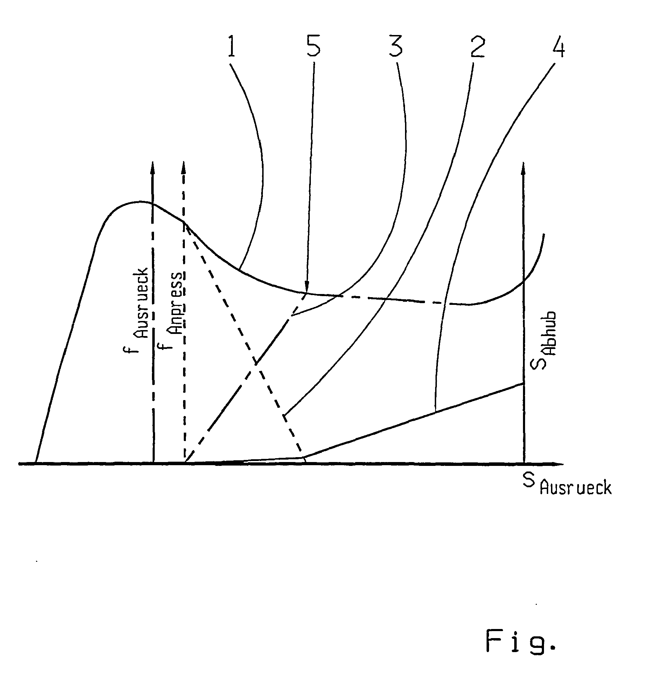

Die Erfindung wird im folgenden anhand der beigefügten Zeichnung näher erläutert. In dieser werden die Kräfte und Wege an der Druckplatte und am Ausrücksystem über dem Ausrückweg dargestellt.

In der Zeichnung ist ein Diagramm dargestellt, in dem eine Membranfederkennlinie mit durchgezogener Linie 1, eine Anpresskraft $f_{Anpress}$ mit gestrichelter Linie 2, eine Ausrückkraft $f_{Ausrück}$ mit strichpuktierter Linie 3 und ein Abhubweg $S_{Abhub}$ der Kupplung mit durchgezogener Linie 4 über den Ausrückweg $S_{Ausrück}$ angedeutet sind.

Als Membranfederkennlinie ist ein typischer Verlauf dargestellt. Die Anpresskraft $f_{Anpress}$ beginnt sich zu reduzieren, wenn die Ausrückkraft $f_{Ausrück}$ am Ausrücksystem aufgebracht wird. Die Ausrückkraft $f_{Ausrück}$ wird immer weiter erhöht bis die Anpresskraft $f_{Anpress}$ den Wert Null erreicht und somit egalisiert ist. Dann liegt ein Kräftegleichgewicht vor. Dieser Punkt ist der Kupplungsanlegepunkt 5.

Im Kupplungsanlegepunkt 5 tritt eine Unstetigkeit im Gradientenverlauf der Ausrückkraft $f_{Ausrück}$ auf, welcher im Verlauf der Ausrückkraft $f_{Ausrück}$ durch einen Knick angedeutet ist. Bei Erreichen des Kupplungsanlegepunktes 5 steigt der Verlauf des Abhubweges $S_{Abhub}$ stärker an, da sich das Kupplungssystem weiter öffnet. Beim weiteren Öffnen der Kupplung ändert sich die Ausrückkraft $f_{Ausrück}$ nur mit der Kennlinie der Membranfeder.

Ausrückkraft und Federkraft können gemessene Größen sein. Sie können aber auch aus den gegebenen Eigenschaften der Bauteile berechnet sein.

Bezugszeichen

1    Verlauf der Membranfederkraft
2    Verlauf der Anpresskraft
3    Verlauf der Ausrückkraft
4    Verlauf des Abhubweges
5    Kupplungsanlegepunkt


**Patentansprüche**

1.  Verfahren zur Ermittlung eines Kupplungsanlegepunktes bei einem Getriebe eines Fahrzeuges mit einem federkraftbetätigten Kupplungssystem, bei dem der Kupplungsanlegepunkt (5) in Abhängigkeit von einer Ausrückkraft als Stellgröße des Kupplungssystems variiert wird, **dadurch gekennzeichnet, dass** als Kupplungsanlegepunkt (5) ein gemeinsamer Schnittpunkt des Verlaufes der Ausrückkraft und der Federkraft über den Ausrückweg des Kupplungssystems ermittelt wird.

2.  Verfahren zur Ermittlung eines Kupplungsanlegepunktes bei einem Getriebe eines Fahrzeuges mit einem federkraftbetätigten Kupplungssystem, bei dem der Kupplungsanlegepunkt (5) in Abhängigkeit von einer Ausrückkraft als Stellgröße des Kupplungssystems variiert wird, **dadurch gekennzeichnet, dass** wenigstens ein Gradientenverlauf der an dem Kupplungssystem anliegenden Ausrückkraft über den Ausrückweg bestimmt wird, und dass eine Unstetigkeit bei dem Gradientenverlauf der Ausrückkraft ermittelt wird, welche den Kupplungsanlegepunkt (5) bestimmt.

3. Verfahren nach Anspruch 2, **dadurch gekennzeichnet, dass** mehrere geeignete Stellgrößen gemessen werden, sodass zumindest Abschnitte eines Gradientenverlaufs der Ausrückkraft vor und/oder nach der Unstetigkeit ermittelt werden.

4. Verfahren nach einem der Ansprüche 1 bis 3, **dadurch gekennzeichnet, dass** bei einem mechanisch betätigten Ausrücksystem die Anpresskraft bei geschlossener Kupplung durch folgende Gleichung bestimmt wird:

$$F_{Anp}(S) = F_{AnpAP} - i_{Hebel} F_{Ausrueck}(S)$$

mit

$F_{Anp}(S)$ = Anpresskraft
$F_{AnpAP}$ = Anpresskraft am Arbeitspunkt
$i_{Hebel}$ = Kraftverstärkungsfaktor
$F_{Ausrueck}(S)$ = Ausrückkraft

5. Verfahren nach Anspruch 4, **dadurch gekennzeichnet, dass** die Ausrückkraft vom Ausrückweg etwa linear abhängig ist und durch folgende Gleichung bestimmt wird:

$$F_{Ausrueck}(S) = c_{Membranfeder} * S_{Ausrueck}$$

mit

$F_{Ausrueck}(S)$ = Ausrückkraft
$c_{Membranfeder}$ = Federkonstante
$S_{Ausrueck}$ = Ausrückweg

6. Verfahren nach einem der Ansprüche 4 oder 5, **dadurch gekennzeichnet, dass** der Kupplungsanlegepunkt (5) bestimmt wird, wenn die Anpresskraft etwa den Wert Null annimmt.

7. Verfahren nach einem der Ansprüche 4 bis 6, **dadurch gekennzeichnet, dass** sich bei dem mechanisch betätigten Ausrücksystem für die Gradientenverläufe der Ausrückkraft folgende Gleichungen ergeben:

$$\frac{d}{ds} F_{Ausrueck}(S) = c_{Membranfeder} \quad für \ S < S_{Anlegepunkt}$$

$$\frac{d}{ds} F_{Ausrueck}(S) = \frac{d}{ds} F_{Tellerfeder}(S_{Teller}) / i_{Hebel} \quad für \ s > s_{Anlegepunkt}$$

wobei gilt

$$F_{Ausrueck}(S) = F_{Tellerfeder}(S_{Teller}) / i_{Hebel}$$

mit

$\frac{d}{ds} F_{Ausrueck}(S)$ = Ableitung von der Ausrückkraft (Gradient)

$F_{Tellerfeder}(S_{Teller})$ = Tellerfederkraft

$s_{Anlegepunkt}$ = Ausrückweg d. dem Kupplungsanlegepunkt entsp.

$i_{Hebel}$ = Kraftverstärkungsfaktor

$c_{Membranfeder}$ = Federkonstante

8. Verfahren nach einem der Ansprüche 1 bis 7, **dadurch gekennzeichnet, dass** bei der Verwendung eines Aktuators zur Ansteuerung des Ausrücksystems durch eine Auswertung von wenigstens einer Stellgröße eine Unstetigkeit bei dem Gradientenverlauf der Ausrückkraft ermittelt wird.

9. Verfahren nach einem der Ansprüche 1 bis 8, **dadurch gekennzeichnet, dass** bei hydraulischer Betätigung des Ausrücksystems wenigstens ein Taktventil verwendet wird.

10. Verfahren nach Anspruch 9, **dadurch gekennzeichnet, dass** bei geschlossener Kupplung ein Kupplungsöffnungstaktventil bzw. bei geöffneter Kupplung ein Kupplungsschließventil mit konstanter bzw. definierter Pulsweite angesteuert wird, und dass durch die Auswertung der erfassten Ausrückwege der Kupplungsanlegepunkt (5) bestimmt wird.

11. Verfahren nach einem der Ansprüche 1 bis 8, **dadurch gekennzeichnet, dass** bei der Verwendung eines elektrischen Systems zur Ansteuerung des Ausrücksystems der Kupplungsanlegepunkt (5) aus den Messungen von Weg, Spannung und/oder Strom ermittelt wird.

12. Verfahren nach einem der Ansprüche 1 bis 8, **dadurch gekennzeichnet, dass** bei Verwendung eines elektro-pneumatischen Systems zur Ansteuerung des Ausrücksystems der Kupplungsanlegepunkt (5) aus den Messungen von Weg und Druck ermittelt wird.

**Claims**

1. The invention relates to a method for determining a clutch application point for a vehicle transmission with a spring-force-actuated clutch system, where the clutch application point (5) is varied dependent on a release force as control variable of the clutch system, **characterized in that** a joint intersecting point of the characteristic curve of the release force and the characteristic curve of the spring force is determined via the release travel of the clutch system as clutch application point (5).

2. A method for determining a clutch application point for a vehicle transmission with a spring-force-actuated clutch system, where the clutch application point (5) is varied dependent on a release force as control variable of the clutch system, **characterized in that** at least one gradient curve of the release force applied to the clutch system is determined via the release travel, and that a discontinuity is determined in the gradient curve of the release force, which determines the clutch application point (5).

3. A method according to claim 2, **characterized in that** several suitable control variables are measured, so that at least sections of a gradient characteristic of the release force prior to and/or after the discontinuity are determined.

4. A method according to one of the claims 1 through 3, **characterized in that** in a mechanically actuated release system, the pressure force for the closed clutch is determined by the following equation:

$$F_{press}(S) = F_{pressWP} - i_{lever} F_{release}(S)$$

with

$F_{press}(S)$ = pressure force

$F_{pressWP}$ = pressure force on the working point

$i_{lever}$ = force amplification factor

$F_{release}(S)$ = release force

5. A method according to claim 4, **characterized in that** the release force is roughly linearly dependent on the release travel and is determined by the following equation:

$$F_{release}(S) = c_{diaphragm\ spring} * S_{release}$$

with

F_{release}(S) = release force
c_{diaphragm\ spring} = spring constant
S_{release} = release travel

**6.** A method according to claim 4 or 5, **characterized in that** the clutch application point (5) is determined when the pressure force is about zero.

**7.** A method according to one of the claims 4 through 6, **characterized in that** for the mechanically actuated release system, the following equations apply for the gradient characteristics of the release force:

$$d/ds\ F_{release}(S) = c_{diaphragm\ spring}\ für\ S<S_{application\ point}$$

$$d/ds\ F_{release}(S) = d/ds\ F_{disk\ spring}(S_{disk})\ /\ i_{lever}\ für\ S>S_{application\ point}$$

with

$$F_{release}(S) = F_{disk\ spring}(S_{disk})\ /\ i_{lever}$$

with

d/ds F_{release}(S) = derivation from the release force (gradient)
F_{disk\ spring}(S_{disk}) = disk spring force
S_{application\ point} = release travel corresponding to clutch application point
i_{lever} = force amplification factor
c_{disk\ spring} = spring constant

**8.** A method according to one of the claims 1 through 7, **characterized in that** when an actuator is used for the control of the release system, at least one control variable is evaluated to determine a discontinuity in the gradient curve of the release force.

**9.** A method according to one of the claims 1 through 8, **characterized in that** with hydraulic actuation of the release system at least one pulse valve is used.

**10.** A method according to claim 9, **characterized in that** with the clutch closed, a clutch-opening pulse valve is controlled and with the clutch open, a clutch-closing pulse valve is controlled with constant or defined pulse width, and that the clutch application point (5) is determined through evaluation of the registered release travels.

**11.** A method according to one of the claims 1 through 8, **characterized in that** when an electric system is used for the control of the release system, the clutch application point (5) is determined on the basis of the measurements of travel, voltage and/or electric current.

**12.** A method according to one of the claims 1 through 8, **characterized in that** when an electropneumatic system is used for the control of the release system, the clutch application point (5) is determined on the basis of the measurements of travel and pressure.

**Revendications**

1. Méthode de détermination d'un point d'appui de l'embrayage d'une boîte de vitesses d'un véhicule dotée d'un système d'embrayage actionné par l'effet d'un ressort, sachant que le point d'appui de l'embrayage (5) varie en fonction d'une force de débrayage étant la grandeur de commande du système d'embrayage, **caractérisée en ce que** en tant que point d'appui de l'embrayage (5) est déterminé un point d'intersection commun de l'allure de la force de débrayage et de la force du ressort, et cela sur la course de débrayage du système d'embrayage.

2. Méthode de détermination d'un point d'appui de l'embrayage d'une boîte de vitesses d'un véhicule dotée d'un système d'embrayage actionné par l'effet d'un ressort, sachant que le point d'appui de l'embrayage (5) varie en fonction d'une force de débrayage étant la grandeur de commande du système d'embrayage, **caractérisée en ce que** en tant que au moins une allure du gradient de la force de débrayage présente dans le système d'embrayage est calculée en tenant compte de la course de débrayage, et **en ce que** une discontinuité de l'allure du gradient de la force de débrayage est déterminée qui détermine le point d'appui de l'embrayage (5).

3. Méthode selon la revendication 2, **caractérisée en ce que** plusieurs grandeurs de commande appropriées sont mesurées, afin de permettre de déterminer au moins des tronçons de l'allure du gradient de la force de débrayage en amont et/ou en aval de la discontinuité.

4. Méthode selon une des revendications 1 à 3, **caractérisée en ce que** avec un système de débrayage actionné par voie mécanique la force de pression, l'embrayage étant fermé, est déterminée à l'aide de l'équation suivante :

$$F_{Anp}(S) = F_{AnpAP} - i_{Hebel} F_{Ausrück}(S)$$

avec

$F_{Anp}(S)$ = Force de pression
$F_{AnpAP}$ = Force de pression au point de travail
$i_{Hebel}$ = Facteur d'amplification de la force
$F_{Ausrück}(S)$ = Force de débrayage

5. Méthode selon la revendication 4, **caractérisée en ce que** la force de débrayage est fonction presque linéaire de la course de débrayage et **en ce qu'**elle est déterminée par l'équation suivante :

$$F_{Ausrück}(S) = C_{Membranfeder} * S_{Ausrück}$$

avec

$F_{Ausrück}(S)$ = Force de débrayage
$C_{Membranfeder}$ = Constante de rappel
$S_{Ausrück}$ = Course de débrayage

6. Méthode selon une des revendications 4 ou 5 **caractérisée en ce que** le point d'appui de l'embrayage (5) est déterminé dès que la force de pression atteigne à peu près la valeur zéro.

7. Méthode selon une des revendications 4 à 6, **caractérisée en ce que** pour un système de débrayage actionné par voie mécanique, en ce qui concerne les allures des gradients de la force de débrayage, résultent les équations suivantes :

$$\frac{d}{ds} F_{Ausrück}(S) = C_{Membranfeder} \text{ für } S < S_{Anlegepunkt}$$

$$\frac{d\_F_{Ausrück}(S)}{ds} = \frac{d\_F_{Tellerfeder}(S_{Teller})}{ds} / i_{Hebel} \text{ für } s > s_{Anlegepunkt}$$

où on a :

$$F_{Ausrück}(S) = F_{Tellerfeder}(S_{Teller}) / i_{Hebel}$$

avec

$\frac{d\_F_{Ausrück}(S)}{ds}$ = Dérivation de la force de débrayage (gradient)

$F_{Tellerfeder}(S_{Teller})$ = Force du ressort Belleville
$S_{Anlegepunkt}$ = Course de débrayage correspondant au point d'appui de l'embrayage
$i_{Hebel}$ = Facteur d'amplification de la force
$C_{Membranfeder}$ = Constante de rappel

8. Méthode selon une des revendications 1 à 7, **caractérisée en ce que** lors de l'utilisation d'un actionneur pour le pilotage du système de débrayage, l'évaluation d'au moins une grandeur de commande permet de déterminer une discontinuité de l'allure du gradient de la force de débrayage.

9. Méthode selon une des revendications 1 à 8, **caractérisée en ce que** en cas d'actionnement hydraulique du système de débrayage est utilisé au moins une soupape à impulsions.

10. Méthode selon la revendication 9, **caractérisée en ce que** avec embrayage fermé est pilotée une soupape à impulsions d'ouverture de l'embrayage ou avec embrayage ouvert une soupape de fermeture de l'embrayage avec largeur des impulsions constante ou définie, et **en ce que** par l'évaluation des courses de débrayage saisies est déterminé le point d'appui de l'embrayage (5).

11. Méthode selon une des revendications 1 à 8, **caractérisée en ce que** en cas d'utilisation d'un système électrique pour le pilotage du système de débrayage, le point d'appui de l'embrayage (5) est déterminé en mesurant la course, la tension et/ou le courant.

12. Méthode selon une des revendications 1 à 8, **caractérisée en ce que** en cas d'utilisation d'un système électro-pneumatique pour le pilotage du système de débrayage, le point d'appui de l'embrayage (5) est déterminé en mesurant la course et la pression.

Fig.